Europäisches Patentamt

European Patent Office

Office européen des brevets

(11) Publication number: **0 388 493**
**A1**

# (12) EUROPEAN PATENT APPLICATION

(21) Application number: **89105154.2**

(51) Int. Cl.5: **H04B 3/23**

(22) Date of filing: **22.03.89**

(43) Date of publication of application:
**26.09.90 Bulletin 90/39**

(84) Designated Contracting States:
**AT BE CH DE ES FR GB GR IT LI LU NL SE**

(71) Applicant: **SA TELINDUS NV**
**Rue Neerveldstraat 109**
**B-1200 Bruxelles(BE)**

(72) Inventor: **Alvarez-Tinoco, Antonio Mario**
**Kerkeveld 14**
**B-3370 Boutersem(BE)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**D-8000 München 86(DE)**

(54) **Digital echo canceller for full-duplex modem with frequency offset tracking.**

(57) A full-duplex data transmission modem consists of a near-end echo cancellation $(\hat{n})$ and a far-end echo cancellation $(\hat{f})$ which is combined with frequency offset correction (16), whereby both cancellations are separated by a bulk delay (25) and whereby the near-end echo cancellation and the far-end echo cancellation operate at least with the real component of the data signals (3) to be transmitted.

FIG. 1

## DIGITAL ECHO CANCELLER FOR FULL-DUPLEX MODEM WITH FREQUENCY OFFSET TRACKING CAPABILITIES IN REMOTE ECHO

The present invention relates to a digital echo cancellation with frequency offset ( or phase-roll ) tracking in remote echo. The problem of hearing an echo in long-distance telephone systems is due to a hybrid circuit which is the interface between the bidirectional ( 2-wire ) and unidirectional ( 4-wire ) lines. Then, the signal is first transmitted from its own set to the local office by means of a 2-wire twisted cable and then over a long-distance 4-wire line. For the careful design of a sophisticated hybrid circuit, the energy of the originator's signal should mainly be transmitted through only 2 wires of the 4-wire line. However, this is almost impossible to achieve due to the variation in impedances seen by the transmitter ( e.g. different type of users, different quality and length of lines, etc. ). Thus, the originator's signal will leak through the receiving end and back from the other 2 wires of the same 4-wire line. It is clear that the leaked information is superimposed onto the main stream of information at this receiver end. There is one hybrid coupler at each end of a two-wire line. As a result, each user suffers from near-end and far-end echoes created by the hybrid at its side and the hybrid at the other side of the telephone line.

A property of echo which is critical of the design of an echo canceller is phase-roll. In transmission over the telephone network, signals have been heterodyned to carrier frequency and back to baseband. If, for a given frequency shift, there is not at some point a precisely equal and opposite shift, echoes will have a time-varying phase corresponding to the net frequency offset among the various carriers and local oscillators in the far-end echo channel. Phase-roll arises in some classes of carrier systems which employ single-sideband ( SSB ) modulation without means of synchronizing the oscillator at either end of the circuit; excepting systems which use detector-type demodulation. Another major source of offset is the frequency-frogging repeaters. When successive periods of the received signal are correlated with the reference signal, the presence of phase-roll will cause the amplitude nd polarity of the value of the echo channel impulse response, at a given delay, to vary in a periodic manner from one interval to the next, as the phase of the echo signal changes.

According to a "Transmission Systems for Communications" report of Bell Telephone Laboratories, 5th ed. 1982, an early method for "echo control" was proposed. The insertion of 3 dB loss in each transmission direction in the 4-wire line suppresses the echo by at least 6 dB but it also introduces an extra 3 dB loss to the speech or data transmission.

An improved method disrupts transmission in one direction in the 4-wire line if information is transmitted in the other direction by means of "echo suppressors". This method is effective for line delays less than 100 msec. However, for satellite links with one or more hops or underwater intercontinental cable links, that disruption could be very annoying.

Therefore, an even more improved method by using adaptive and preferably digital echo cancellers may be deployed. Echo cancellers are used in order to improve the performance of full-duplex two-wire networks throughout the public service telephone network ( PSTN ). Although, full-duplex operation of 2 wire modems up to 2400 bps is feasible without echo cancellation techniques; for higher data rates, e.g. 4800, 9600, 14400, 16800 and 19200 bps, satisfactory operation requires a good echo cancellation.

Several echo canceller structures have been extensively studied and compared ( see Cowan and Grant, "Adaptive Filters", Prentice-Hall Signal Processing Series, 1985 ). These correspond to an adaptive filter placed in parallel to the echo path which task is to extract enough information in order to copy the linear transfer function of such a path, by means of gradient techniques. The non-linear part of the transfer function is beyond the scope of this invention because non-linearities can be considered negligible. The copy is identified in time delay and polarity and used to recover the far-end transmitted signal. This recovered signal is used to obtain the correlation of the originator's transmit and desired ( far-end ) signals and continuously improve, as a function of time, the echo path copy. Classically, this filter has been implemented as an unconditionally stable all-zero filter structure ( i.e. FIR ), although in recent years the possibility of reducing the filter's order and reduce the cost and high computational complexity by means of a rational function with poles and zeros ( i.e. IIR ), has also been considered. However, due to possible instability and slower convergence, these techniques are not here considered. Phase-roll tracking is not foreseen in these methods (also known as frequency offset or time-varying phase tracking methods).

An article by S.B. Weinstein ( "A passband data-driven echo canceller for full-duplex transmission on two-wire circuits", IEEE Trans, Commun. vol. COM-25, No. 7, pp 654-666, July, 1977 ) describes an echo canceller which is driven by sampled data for full-duplex transmission on two-wires and introduces the basics of frequency compensation.

Frequency compensation has been also considered J-D. Wang and J-J. Werner ( "Performance analysis of an echo cancellation arrangement that compensates for frequency offset in the far echo", IEEE Trans Commun. vol. COM-36, No. 3, pp 364-372, March, 1988 ). They propose a system based on first order PLL techniques. Both approaches use a complex signal echo canceller.

## SUMMARY OF THE INVENTION

The object of the present invention is to present an echo canceller with frequency offset tracking capabilities ( phase-roll tracking capabilities ) on the remote echo.

In order to cancel the echo originated in the local end ( i.e. near-end echo ) a real component echo canceller can for example be deployed. This results in a considerable increase of the time span of the echo canceller and reduces the complexity of the implementation, strongly reducing the fabrication costs.

The echo canceller consists of a near-end echo canceller and a far-end echo canceller, whereby both can operate with the complex value (real + imaginary) or only the real component of the data signals to be transmitted. Combinations are also possible: e.g. the near-end echo canceller operating with only the real components and the far-end echo canceller operating with the entire complex value.

This echo canceller corresponds to an adaptive transversal filter based on the stochastic gradient search Least-Mean-Square ( LMS ) algorithm which obtains the optimum filter solution in an iterative form. The real component echo canceller actually consists of two cancellers, the near-end and the far-end echo cancellers with different lengths. The near-end echo canceller produces a replica of the echo generated in the hybrid circuit of the local modem. The replica of the echo is subtracted from the received signal. The near-end echo cancellation is obtained after pulse-shaping filtering and the residual echo ( i.e. error signal ) is used as the input of a splitter ( e.g. Hilbert transform ) which generates a complex signal ( in-band and quadrature components ) for further processing. Provision is made for limiting the number and location of active taps on the adaptive transversal filter to those actually necessary for replicating the echo channel, resulting in two transversal filter sections of moderate length.

The echo canceller consists of a near-end canceller and a far-end echo canceller, whereby both can operate with the complex value ( real and imaginary components ) or only the real component of the modulated transmitted data signals. Combinations are also possible: e.g. the near-end echo canceller operating with only the real component and the far-end echo canceller with the entire complex value.

In order to eliminate the phase-roll, the tap adjustment algorithm used in the adaptive transversal filter works in conjunction with a phase and/or frequency offset correction algorithm. The solution proposed here consists of a far-end echo canceller which output signal has been coverted into a complex signal by means of a phase splitter, and a digital phase-locked loop ( DPLL ) structure to track frequency offset. The echo canceller can be used in a full-duplex two-wire high-speed modem with a phase-roll tracking structure for both training period and full-duplex operation. This combination produces a very reliable alternative capable of tracking frequency offset due to its stability-forcing feature. The calculation of the far-end echo and far-end signal energies re-initiates the loop filter of the phase-roll tracker at the beginning of full-duplex operation. Variable stepsize for the near-end and far-end echo cancellers is implemented during half-duplex operation; and changes in the loop filter bandwidth for the phase-roll tracker are implemented during full-duplex operation. This considerably reduces the noise introduced in the near-end echo canceller due to both the residual local echo and the remote echo.

The present invention therefore proposes method and apparatus as defined in the claims.

## DESCRIPTION OF THE DRAWINGS

The present invention relates to an echo cancellation method and apparatus with frequency offset tracking in remote echo for a full-duplex data transmission modem consisting of a near-end echo cancellation and a far-end echo cancellation which is combined with the frequency offset correction, whereby both cancellations are separated by a bulk delay and whereby the near-end echo cancellation and the far-end echo cancellation operate at least with the real component of the data signals to be transmitted.

Embodiments of the echo canceller according to the invention and their advantages will now be further explained with reference to the drawings, in which

FIG 1 is a block diagram of a first embodiment of an echo canceller according to the invention used for data transmission of a full-duplex modem with frequency offset tracking capabilities in remote echo;

FIG 2 is a block diagram of a second embodiment of the present invention;

FIG 3 represents the adaptive digital filter used within the echo canceller where the echo canceller

EP 0 388 493 A1

and bulk delay shifting procedure, and echo canceller filtering and adjusting are highlighted;

FIG 4 is a block diagram derived from FIG 1 corresponding to the transmitter 1 and receiver 2 elements;

FIG 5 is a block diagram of the rotator 20 function which is also used by the derotator 21;

FIG 6 represents the difference circuit with frequency offset correction 16 in which the half-duplex operation blocks and the full-duplex operation blocks are distinguished;

FIG 7 shows the full-duplex stability-forcing 51 elements for the transition between half-duplex and full-duplex operation;

FIG 8 is a block diagram derived from FIG 1 corresponding to the pretransmitter 23 element;

FIG 9 is a block diagram of a further possible embodiment of the present invention;

FIG 10 is a block diagram of the call mode and the answer mode of the handshacking procedure in which the different steps of the echo canceller settings are drawn.

## DETAILED DESCRIPTION

Before starting the explanation with reference to the figures, the mathematical development will be first explained. The required mathematical tools are based on the above-mentioned articles by Weinstein and Wang & Werner.

The article by S.B. Weinstein describes the following mathematical developments concerning the echo cancellation part. The echo canceller structure is of the Nyquist or interpolating type which cancels the echo at all frequencies. This in-band canceller synthesizes passband filters rather than baseband filters. The two-dimensional ( in-phase and quadrature ) modulated signal is represented by the expression

$$s(t) = \mathrm{Re} \left\{ \sum_{n=-\infty}^{\infty} A_n \, g(t-nT) \, e^{jw_c t} \right\},$$

where $A_n = a_n + jb_n$ is the discrete-valued multilevel complex symbol to be transmitted, $g(t)$ is a Nyquist pulse, $1/T$ is the symbol rate and $w_c/2\pi$ is the carrier frequency. When the signal $s(t)$ is transmitted through a channel with impulse response $h(t)$, the analytic signal corresponding to the output signal is

$$z(t) = \sum_{n=-\infty}^{\infty} A_n \, e^{jw_c nT} \, g(t-nT) \, h(t-nT) \, e^{jw_c(t-nT)}.$$

If $R(t) = g(t) \, e^{jw_c t} \bullet h(t)$, then $z(t) = \sum_{n=-\infty}^{\infty} A_n \, e^{jw_c nT} \, R(t-nT)$, where $\bullet$

denotes convolution and $R(t) = r(t) + j\hat{r}(t)$ is the complex echo channel impulse response. The signal at the output of the channel is the real part of $z(t)$, i.e.

$$s_1(t) = \sum_{n=-\infty}^{\infty} \left[ a_n \, e^{jw_c nT} \, r(t-nT) - b_n \, e^{jw_c nT} \, \hat{r}(t-nT) \right].$$

Thus, the echo $s_1(t)$ is obtained by feeding the symbols $a_n \, e^{jw_c nT}$ and $b_n \, e^{jw_c nT}$ to in-phase and quadrature bandpass filters with impulse responses $r(t)$ and $\hat{r}(t)$, respectively. This suggests the following structure for a digitally implemented data-driven echo canceller. The rotated symbols $a_n \, e^{jw_c nT}$ and $b_n \, e^{jw_c nT}$ are fed to two transversal filters with variable tap coefficients and tap delay spacing of $T'$. The signal $s_1(t)$ is sampled at a rate $1/T'$, which will be assumed to be at least twice the highest frequency of $s_1(t)$, so that the wanted far-end incoming signal, which is added to $S_1(t)$ in full-duplex operation, can be reconstructed after cancellation. A Mean-Squared Error ( MSE ) criterion can then be used to adapt the tap coefficients. Ideally, after adaption, the tap coefficients of the two transversal filters converge to the sampled

4

values r(t) and $\hat{r}(t)$.

In order to adapt the tap coefficients of the canceller, the MSE between the output of the canceller and the echo channel will be minimized. That is, each output is computed, an error is derived, and a stochastic-gradient algorithm is used to update the tap coefficient values. Nyquist cancellation is obtained by repeating these operations at a sampling rate $1/T'$. The analysis of the prior art introduces the concept of symbol-driven cancellation. This means the input symbols generated at the rate $1/T$, are fed into the canceller at the sampling rate $1/T'$, but only one input value is valid. The remaining samples being zero. In symbol-driven cancellation, the echo canceller is divided into a number of subcancellers depending on the ratio $T/T'$ (as explained in the article of Weinstein ). For simplicity of notation, the inputs of the echo canceller are assumed to be the original symbols $a_n$ and $b_n$ rather than the rotated symbols $a_n e^{jw_c nT}$ and $b_n e^{jw_c nT}$, respectively.

$a_n^T = [ a_n, a_{n-1}, a_{n-2}, a_{n-3}, \ldots ]$ = in-phase data vector

$b_n^T = [ b_n, b_{n-1}, b_{n-2}, b_{n-3}, \ldots ]$ = quadrature data vector

$c^T = c_{-N}, c_{-N+1}, c_{-N+2}, c_{-N+3}, \ldots ]$ = vector of in-phase tap coefficients of the canceller $d^T = [ d_{-N}, d_{-N+1}, d_{-N+2}, d_{N+3}, \ldots ]$ = vector of quadrature tap coefficients of the canceller

$r^T = [ r(T'), r(T+T'), r(2T+T'), \ldots ]$ = vector of in-phase samples of the echo channel

$r'^T = [ r'(T'), r'(T+T'), r'(2T+T'), \ldots ]$ = vector of quadrature** samples of the echo channel

(** $r' = - \hat{r}$. The outputs of the echo channel and the echo canceller at times $nT + T'$ are

$s_e(nT + T') = a_n^T r + b_n^T r' + E_n$

$s_c(nT + T') = a_n^T c + b_n^T d)$

where $E_n$ is an additive interference signal that is uncorrelated with the signal to be cancelled. This interference will generally consists of the desired ( far-end ) signal and some additive noise with gaussian probability density function. The error $e_n$ between the outputs of the echo channel and the echo canceller is

$e_n = s_e(nT + T') - s_c(nT + T')$

and the minimization of the MSE is required

$E_i = <(e_n)^2> = <[s_e(nT + T')-s_c(nT + T')]^2>$

$= <[a_n^T(r-c) - b_n^T(r'-d) + E_n]^2>$

where $< >$ denotes the expectation of the quantity inside the brackets. Note that $E_i$ cannot be smaller than the irreducible noise $< E_n^2>$.

The adjustment algorithms for the updating of the canceller tap coefficients are obtained by taking the gradient of the MSE with respect to the tap vector c and d.

$$\frac{\partial E_i}{\partial c} = -2<a_n e_n> = r - c$$

$$\frac{\partial E_i}{\partial d} = -2<b_n e_n> = r' - d$$

The gradients, with respect to the squared error rather than the MSE, are used for the adjustment of the tap coefficients. The corresponding stochastic tap adjustment algorithms are then

$c_{n+1} = c_n + \mu a_n e_n$

$d_{n+1} = d_n + \mu b_n e_n$

where $\mu$ is the stepsize of the adjustments.

In the present invention, an adaptive version in which the error generation involves delays, the stability and convergence criteria of the canceller adjustment procedure must be examined anew. If only the first term of $s_1(t)$ is considered, the output of the echo channel is obtained by feeding the modulated combination of the symbol components $a_n$ and $b_n$ to one transversal filter only, with the respective variable real tap coefficient values, which is the solution presented in this invention. The present invention allows symbol-driven cancellation ( as mentioned above ) or sample-driven cancellation. In the latter, the input symbol values are fed into the canceller at the sampling rate $1/T'$, all the samples being valid and taken into consideration for the canceller's output calculation. The stochastic tap adjustment for adjusting the canceller to minimize the MSE takes a step in the direction opposite to the direction of the gradient of the error $\Omega$ time units ago, the algorithms are modified to obtain

$c_{n+1} = c_n + \beta a_{n-\Omega T'} e_n$

$d_{n+1} = d_n + \beta b_{n-\Omega T'} e_n$

where $\beta$ is the new stepsize value of the adjustments and $\Omega$ is the delay involved in the tap adjustment loop at the sampling rate $1/T'$, which is needed due to the Hilbert transformers in both the transmission path and the far-end cancellation path. The value of $\beta$ is obtained as

$$\beta = (BN)^{-1} \sin \left( \frac{\pi}{4\Omega+2} \right)$$

where $B$ will be defined later on. This analysis assumes that the data vectors $a_n$ and $b_n$ in the echo canceller are uncorrelated between successive tap adjustments. In other words, in compact form

$$C_{n+1} = C_n + \mu A_{n-\Omega T'} e_n \quad \text{and} \quad \mu = \frac{\beta}{\sin \left( \frac{\pi}{4\Omega+2} \right)}$$

where $C_n = c_n + jd_n$ and $A_{n-\Omega T'} = a_{n-\Omega T'} + jb_{n-\Omega T'}$, the impulse response error signal corresponds to

$$e_{n+1} = e_n - \mu A_{n-\Omega T'} e_n + F_n$$

which is the canceller tap error as

$$e_n = R - C_n = [r - c_n + j(\hat{r} - d_n)]$$

where $R = r + j\hat{r}$ is the discrete echo channel impulse response and $F_n = R_{n+1} - R_n$, the latter will be analysed later on. And corresponds to the influence of frequency offset in the far-end echo channel. The canceller error at the (n)th iteration is

$$e_n = (r^T - c^T_n)a_n + (\hat{r}^T - d^T_n)b_n + E_n$$
$$= 1/2(e^T_n A^*_{n-\Omega T'} + A^T_{n-\Omega T'} e^*_n) + E_n$$

where * denotes the complex conjugate. The MSE at the (n)th iteration becomes

$$< e^2_n > = 1/4 < (e^T_n A^*_{n-\Omega T'} + A^T_{n-\Omega T'} e^*_n)^2 > + < E^2_n >$$

The tap error vector $e_n$ depend only on the vector $A_{n-\Omega T'-1}$. If we assume that consecutive data vectors $A_{n-\Omega T'-1}$ and $A_{n-\Omega T'}$ are uncorrelated, and that the $a_n$'s are uncorrelated with the $b_n$'s, then

$$<e^2_n> = B < e^T_n e^*_n > + < E^2_n >$$

where $B = <a^2_n> = <b^2_n> = <a^2_{n-\Omega T'}> = <b^2_{n-\Omega T'}>$ is the variance in the symbols. The MSE at the (n+1)th iteration is

$$<e^2_{n+1}> = B < e^T_{n+1} e^*_{n+1} > + < E^2_n >$$
$$= B < (e^T_n + F^T_n - \mu e_n A^T_{n-\Omega T'})(e^*_n + F^*_n - \mu e_n A^*_{n-\Omega T'}) > + < E^2_n >$$
$$= B < e^T_n e^*_n > - \mu B < e_n(A^T_{n-\Omega T'} e^*_n + e^T_n A^*_{n-\Omega T'}) > + 2\mu^2 B^2 N <e^2_n> + B f(F_n),$$

where $A^T_{n-\Omega T'} A^*_{n-\Omega T'} = 2BN$ and $f(F_n) = <F^T_n (e^*_n - \mu e_n A^*_{n-\Omega T'}) + (e^T_n - \mu e_n A^T_{n-\Omega T'}) F^*_n>$. Setting $F_n$ to zero, we obtain

$$<e^2_{n+1}> = (1 - 2\mu B + 2\mu^2 B^2 N)<e^2_n> + 2\mu B < E^2_n >.$$

The solution to this recurrence equation is

$$<e^2_n> = \left(1 - 2\mu B + 2\mu^2 B^2 N\right)^n <e^2_0> + \frac{1 - \left(1 - 2\mu B + 2\mu^2 B^2 N\right)^n}{1 - (1 - 2\mu B + 2\mu^2 B^2 N)} 2\mu B < E^2_n > \tag{1}$$

where N is the number of complex taps in the canceller. For convergence, it is required that

$$|1 - 2\mu B + 2\mu^2 B^2 N| < 1$$

so that the stepsize $\mu$ has to satisfy

$$0 < \mu \leq (BN)^{-1}$$

The stepsize that provides the faster speed of convergence to the corresponding steady-state MSE is obtained by setting the derivative of the above expression to zero

$$\frac{\partial (1 - 2\mu B + 2\mu^2 B^2 N)}{\partial \mu} = 0 = -2B + 4\mu B^2 N$$

the optimum value may be obtained

$$\mu_{opt} = (2BN)^{-1}$$

or one-half the maximum stepsize. It is also clear that the canceller's steady-state MSE for a given stepsize is given by

$$<e^2> = <E^2_n>(1-\mu BN)^{-1}$$

So far in this analysis, the echo canceller has been considered as only one filter separated by a bulk delay with only one error generation and one adaption algorithm.

According to the present invention, the data-driven echo canceller structure for both the near-end and far-end sections can be implemented as only one transversal filter with the respective variable real tap coefficients, for each canceller. However, the correct information sharing between the two cancellers and the phase-roll tracker in the half-duplex training period produces a similar system performance to the fully complex approach. Also, if the canceller is separated into two sections, the previous analysis applies, as far as convergence speed and minimum MSE are concerned.

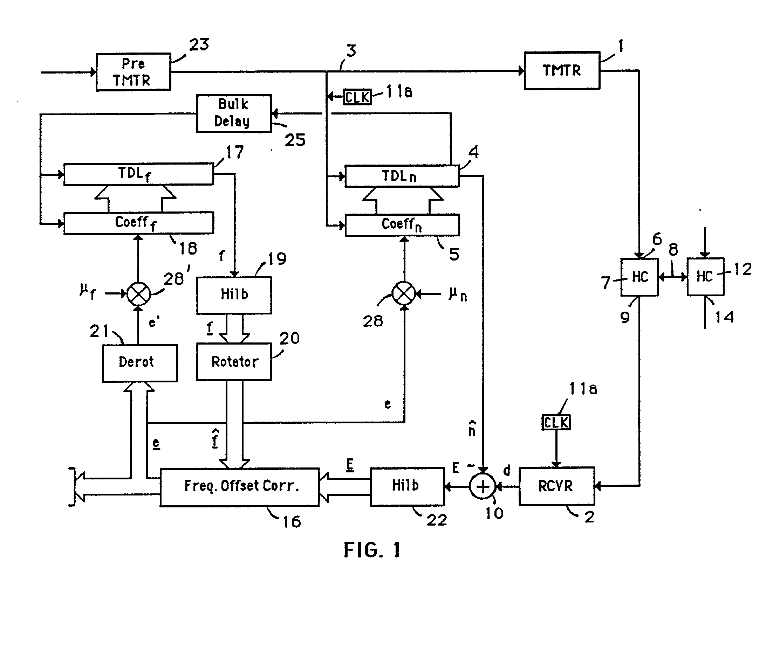

The echo canceller, then corresponds to separated near-end and far-end echo canceller sections in which their inputs are available at different times. This is due to the software configuration of the modem, the cancellers can be either sample-driven or symbol-driven. Other alternatives are possible, namely the combination of both techniques, e.g. the near-end canceller can be sample-driven while the far-end canceller can be symbol-driven ( see FIG 1, FIG 2 and FIG 9 ). Therefore, there exists a splitting approach of the two cancellers according to the following criterion: the filtering may be obtained in two steps without changing the original concept, which for real signal is

$$s_c(nT+T') = \sum_{i=0}^{K+M-2} a_{n-i}\, c_i(\,n\,)$$

where $K+M=N$, $K$ is the number of real taps in the near-end canceller section and M is the number of real taps in the far-end canceller section. However, this equation may be easily splitted into

$$s_c(nT+T') = s_{cn}(nT+T') + s_{cf}(nT+T')$$

$$\text{where}\quad s_{cn}(nT+T') = \sum_{i=0}^{K-1} a_{n-i}\, c_i(\,n\,) \qquad (2)$$

$$\text{and}\quad s_{cf}(nT+T') = \sum_{i=K}^{M-2} a_{n-RTD-i}\, c_i(\,n\,)$$

producing two types of error, a local error and a global error which is the combination of both the residual near-end and residual far-end echoes and RTD being the round trip delay value. Separated into two parts, we obtain

$$e_o(n) = r(n) - s_{cn}(nT+T')$$
$$e_f(n) = e(n) = e_n(n) - s_{cf}(nT+T')$$
$$= r(n) - [s_{cn}(nT+T') + s_{cf}(nT+T')]. \qquad (3)$$

In order to avoid the situation in which only the local error is available and there is a need of adjusting all or some filter tap coefficients, the updating of the adjustment algorithm suffers a modification that still obeys the gradient LMS criterion and corresponds to

$$c_i(n+1) = c_i(n) + \mu_{near}\, a_{n-i-\Omega T'-1}\, e(n-1),$$
for $0 \le i \le K-1$, and
$$c_i(n+1) = c_i(n) + \mu_{far}\, a_{n-RTD-i-\Omega T'-1}\, e(n-1), \qquad (4)$$
for $K \le i \le M-2$, where $\Omega$ is the delay introduced by the Hilbert transformers within the adjustment loop of both the near-end and far-end echo cancellers ( transmission and far-end cancellation paths ).

As the adaptive filter is required to produce only the real output, half the processing, that which produces the imaginary output, disappears. The error signal is now purely real so that the tap updating is simpler.

As the echo canceller is driven by the data ( or modulated data ) and the data are normally scrambled before encoding, the input signal to the adaptive filter is spectrally white. As a result, the echo canceller convergence depends only on the number of taps of the adaptive filter, the amplitude probability density function of the data symbols, and the value of the stepsize, $\mu$.

It is clear that the same analysis applies to complex signals for both the near-end and far-end echo cancellers in accordance to the equations

$$S_{cn}(nT+T) = \sum_{i=0}^{K-1} A_{n-i} C_i(n)$$

where $C_i(n)$ is updated by means of
$C_i(n+1) = C_i(n) + \mu_{near} A_{n-i-\Omega T'-1} \underline{e}(n-1)$,
for the near-end echo canceller and in accordance to the equations

$$S_{cf}(nT+T) = \sum_{i=K}^{M-2} A_{n-RTD-i} C_i(n)$$

where $C_i(n)$ is updated by means of
$C_i(n+1) = C_i(n) + \mu_{far} A_{n-RTD-i-\Omega T'-1} \underline{e}(n-1)$,
for the far-end echo canceller.

The article by J-D Wang and J-J Werner describes a compensation technique for frequency offset in the remote echo. The two-dimensional ( in-phase and quadrature ) modulated signal affected by frequency offset can be represented by the expression.

$$s(t)=Re \left\{ \sum_{n=-\infty}^{\infty} A_{n-\Omega T'} \, g(t-nT) \, e^{j(w_c t + w_1 t)} \right\} ,$$

where $A_{n-\Omega T'} = a_{n-\Omega T'} + jb_{n-\Omega T'}$ is the discrete-valued multilevel complex symbol to be transmitted, g(t) is a Nyquist pulse, 1/T is the symbol rate, $w_c/2\pi$ is the carrier frequency and $w_1$ is the radian frequency offset. For the analysis of the frequency offset effect on the far-end echo canceller, first consider that the symbol vectors $A_{n-\Omega T'}$ are rotated by small increments $\Delta = w_1 t$ at the input of a time-invariant channel, second, consider that the nonrotated symbols $A_{n-\Omega T'}$ are the inputs of both the far-end echo canceller and the echo channel, and that the algorithms earlier analysed are used for updating the tap coefficients. Here, the analysis is similar to the one made before with no frequency offset up to the equation:
$<e^2_{n+1}> = (1-2\mu B + 2\mu^2 B^2 N)<e^2_n> + 2\mu B <E^2_n> + B f(F_n)$
where
$f(F_n) = <F^T_n(e^*_n - \mu \, e_n A^*_{n-\Omega T'}) + (e^T_n - \mu \, e_n A^T_{n-\Omega T'})F^*_n>$
$= F^T_n(R^*_n + <C^*_{n+1}>) + (R^T_n - <C_{n+1}>)F^*_n$

The evaluation of this quantity requires the updating equation of complex tap weights

$<C_{n+1}> = <C_n> + \frac{\mu}{2}<A_{n-\Omega T'}(e^T_n A^*_{n-\Omega T'} + A^T_{n-\Omega T'} e^*_n)>$
$= <C_n> + \mu B < e_n>.$

To obtain a recurrence equation
$<C_{n+1}> = <C_n>(1 - \mu B) + \mu B \, Re^{jn\Delta}$
where $Re^{jn\Delta} = R = r + jr^\Lambda$ . The solution of this equation was found to be:

$$<C_{n+1}> = <C_0>(1 - \mu B)^{n+1} + \mu B \, Re^{-jn\Delta} \frac{1-(1-\mu B)^{n+1} e^{-j(n+1)\Delta}}{(1-1-\mu B) e^{-j\Delta}}$$

In steady-state operation, as n goes to infinity

$$<C_{n+1}> = \mu \ B \ R e^{-jn\Delta} \frac{1}{1-(1-\mu \ B) \ e^{-j\Delta}}$$

and after some algebra

$$f(F_n) = -2R^2(1-\mu \ B) \frac{3 - 4 \cos \Delta + \cos 2\Delta - 2\mu \ B(1-\cos \Delta)}{1 + (1-\mu \ B)^2 - 2(1-\mu \ B) \cos \Delta}$$

where $R^2 = R^T R^*$. If the approximation $\cos \Delta \approx 1 - \frac{\Delta^2}{2}$ applies for $\Delta \ll 1$ then,

$$f(F_n) \approx \frac{2\mu \ B(1-\mu \ B) \ \Delta^2 R^2}{\mu^2 B^2 + (1-\mu \ B) \ \Delta^2}$$

which is a constant. Thus, the solution of the complete recurrence equation is

$$<e^2_n> = (1-2\mu \ B+2\mu^2 B^2 N)^n <e^2_0> + \frac{1-(1-2\mu \ B+2\mu^2 B^2 N)^n}{1-(1-2\mu \ B+2\mu^2 B^2 N)}$$

$$2\mu \ B <E^2_n> + [ \frac{1-\mu \ B}{1-\mu \ BN} \frac{B \ \Delta^2 R^2}{\mu^2 \ B^2 + (1-\mu \ B) \ \Delta^2} ], \qquad (5)$$

this solution sets a lower bound for the echo canceller, in other words, the minimum MSE for a specific stepsize value, $\mu$. Comparing equation (1) with (5), the last term represents the influence of the frequency offset in the system. Another useful measurement to obtain the final performance is the Echo-Return-Loss Enhancement ( ERLE ) which corresponds to the ratio of the uncancelled echo power to the residual echo power and is given by

$$ERLE = - \log [ \frac{1-\mu \ B}{1-\mu \ BN} \frac{\Delta^2}{\mu^2 B^2 + (1-\mu \ B) \ \Delta^2} ]$$

Note that ERLE goes to zero when the stepsize $\mu$ goes also to zero.

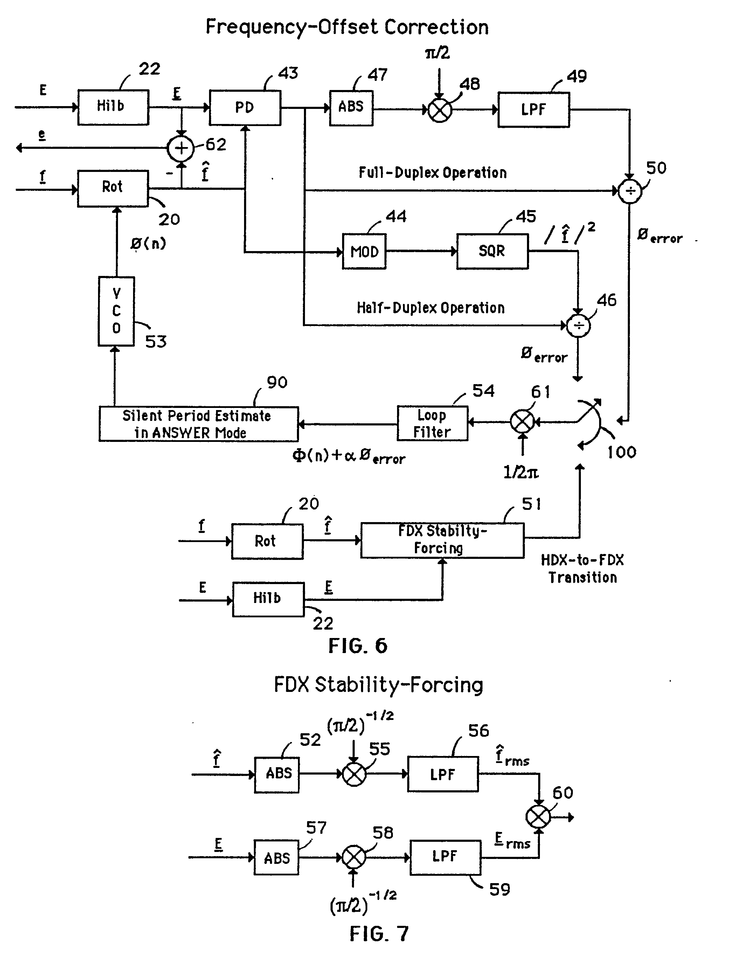

In the present invention, the phase-roll tracking algorithm consists of a second order digital phase-locked loop. The functioning of this tracker concerning half-duplex and full-duplex operations, as well as the procedure to initialize the loop filter with its stability-forcing feature, and the changes of the filter bandwidth in full-duplex operation to reduce the filter noise, will be explained and described with reference to FIG 6 and FIG 7.

Due to the fact that the transient behaviour of the far-end echo canceller adaption is very difficult to analyse when the DPLL is also interacting, by letting first the far-end echo canceller converge and track part of the frequency offset, and then update the loop filter of the DPLL, this transient behaviour is avoided.

Fig 1 shows a first embodiment of a digital echo canceller for data transmission with frequency offset tracking capabilities in the remote echo according to the invention together with a transmitter 1 and a receiver 2. The quadrature amplitude modulated signal to be transmitted is applied through a lead 3 to the transmitter 1. The output of transmitter 1 is connected to a transmit port 6 of a hybrid coupler 7.

This hybrid coupler 7 ensures that the signal originating from transmitter 1 is applied to a transmission line 8 and that a signal originating from transmission line 8 is applied to receiver 2. Due to the fact that this hybrid coupler 7 is not ideal, when the transmitter 1 transmits, a part of the transmit energy leaks out at the receive port 9 of hybrid coupler 7 and superimposes the far-end incoming signal. This transmit energy will be called local echo signal hereinafter. Now, when transmitter 1 transmits, the biggest part of the transmit energy passes through the hybrid coupler 7 and arrives to the hybrid coupler 12. Here again, part of this transmit energy leaks back at the receive port 14 of hybrid coupler 12. This leaked energy will be called remote echo signal hereinafter. This remote echo signal passes through transmission line 8 and arrives at the receive port 9 of hybrid coupler 7. The local echo signal together with the remote echo signal forming the echo signal d or r(n) for half-duplex operation. However, for full-duplex operation, this signal d also contains the far-end incoming signal and the system noise.

In order to cancel a local echo signal after receiver 2, the near-end echo canceller comprises a difference circuit 10, one input corresponds to this echo signal d and the other input, a local echo copy $\hat{n}$ . This difference circuit supplies a difference signal $E = d - \hat{n}$ , for $d = r(n)$ and $\hat{n} = S_{cn}(nT + T')$, which will be called near error signal hereinafter. The classical technique to perform this operation uses an adaptive digital filter which consists of a tapped delay line 4 and a set of coefficients 5 of this filter being controlled by means of either the near error signal E or by means of the real part e of the global error signal e in such a way that the mean square value of the contribution of the near error signal E, is at a minimum. The tap coefficients of this filter are adjusted at discrete instants $1/T'$ by means of a clock signal controlled by clock generator 11a. In this classical technique, the multiplications to be performed in this digital filter are computationally expensive as a function of the number of near-end echo canceller coefficients. Here, the tapped delay line 4 is only made with one circular shift register instead of two circular shift registers ( one for the in-phase and another for the quadrature components ), as only the real set of tap coefficients are used. Also, the set of coefficients 5 are made with only one circular shift register corresponding to the in-phase component.

To cancel a remote echo signal after receiver 2, the far-end echo canceller comprises also a difference circuit incorporated within the frequency offset corrector 16. One input corresponds to the splitted difference signal E ( output of the Hilbert Transform 22 ) and the other input a remote echo copy $\hat{f}$ . This frequency offset corrector 16 supplies a difference signal $e = E - \hat{f}$ , for $\hat{f} = s_{cf}(nT + T')$, which will be called global error signal hereinafter.

The same technique for this adaptive digital operation is here used in which another tapped delay line 17 and another set of coefficients 18 of this adaptive digital filter being controlled by means of the signal $e'$, which is the output of the derotator 21, to obtain that the global mean square value of the global error signal e, is at a minimum. Due to the fact that the impulse response originating the remote echo signal may be more than twice the impulse response in time originating the local echo signal, the number of far-end echo canceller coefficients will grow with the same proportion. Converting an analytic ( complex ) echo canceller into an only real ( in-band ) echo canceller is advantageous especially in the case when the number of multiplications would set a prohibitive limit at the canceller's cost. However, the frequency offset corrector 16 requires an analytic signal to be used to correct the frequency offset effect originating in all the way round from hybrid coupler 7 to hybrid coupler 12, therefore, the far-end canceller output signal f is supplied to a phase splitter device or Hilbert transformer 19 which gives a delayed complex signal to be fed to a rotator 20 to rotate the signal in the direction of the frequency offset and to reduce as much as possible the frequency offset effect introduced into the part of the receive signal corresponding to the remote echo signal. In the same way, a derotator 21 is required to perform the correct adjustment algorithm with global error signal e rotated in the opposite direction to the frequency offset direction.

The adjustment algorithm used to obtain the local echo copy $\hat{n}$ and remote echo copy $\hat{f}$ uses the adaptive version in which the error generation involves delays as explained above in the mathematical part and which is introduced within the adjustment loop. This corresponds to the delay caused by the main path phase splitter or Hilbert transformer 22 with reference to the near-end echo canceller and by the Hilbert transformer 19 concerning the far-end echo canceller.

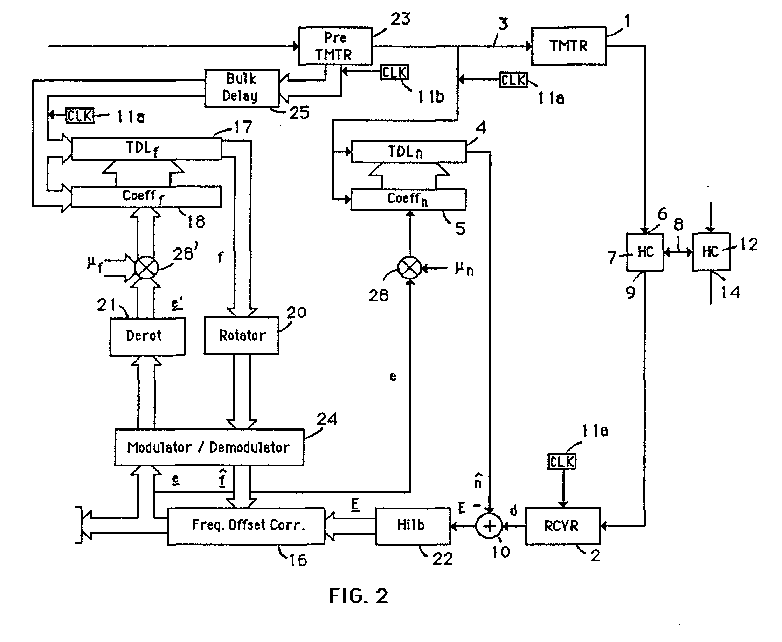

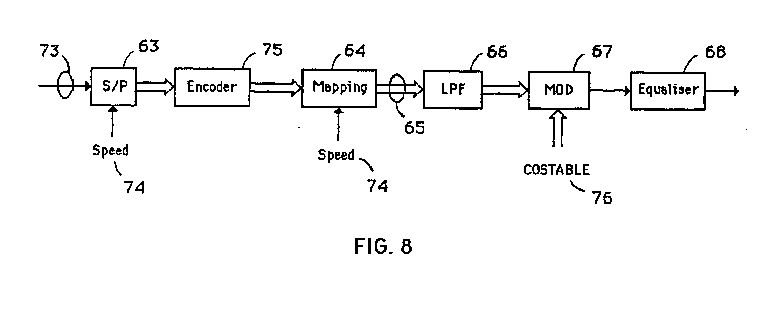

FIG 2 shows another embodiment of the digital echo canceller in which the input of the far-end echo canceller adaptive digital filter ( having an in-phase path and a quadrature path ) is directly connected to the pretransmitter 23 ( after the phase-point generation described later in FIG 8 ) through the bulk delay 25, for receiving data symbols. The near-end echo canceller is sample-driven and the far-end echo canceller is symbol-driven. In symbol-driven cancellation, the echo canceller is divided into a number of subcancellers, depending on the ratio $T/T''$ ( as explained in the above mathematical part ). Therefore, the echo canceller system requires, together with both the in-phase and quadrature subcancellers of the far-end echo canceller, a modulator/demodulator device 24 which is needed in order to perform the required operation in the echo canceller filtering and adjustment algorithms. When comparing FIG 1 and FIG 2, we observe that in FIG 2 the far-end filtering and the coefficient updating is performed in baseband, while in FIG 1, this is obtained in passband. The global error signal e is demodulated from passband to baseband while the signal coming from rotator 20 is modulated from baseband to passband. This optimizes the memory space of the bulk delay 25; the unmodulated symbols ( baseband signals ) are easily represented in half the wordlength ( i.e. 8 bits ), therefrom the in-phase and quadrature components of a 1/T interval fit in one word of memory space. If the bulk delay 25 is fed with symbols at a clock rate 1/T instead of 1/T', the introduction of zeroes ( symbol-driven data ) in the bulk delay 25 is avoided. Therefore, the bulk delay is controlled by means of a clock signal generated by the clock generator 11b. The other parts are controlled by a clock signal generated by the clock generator 11a.

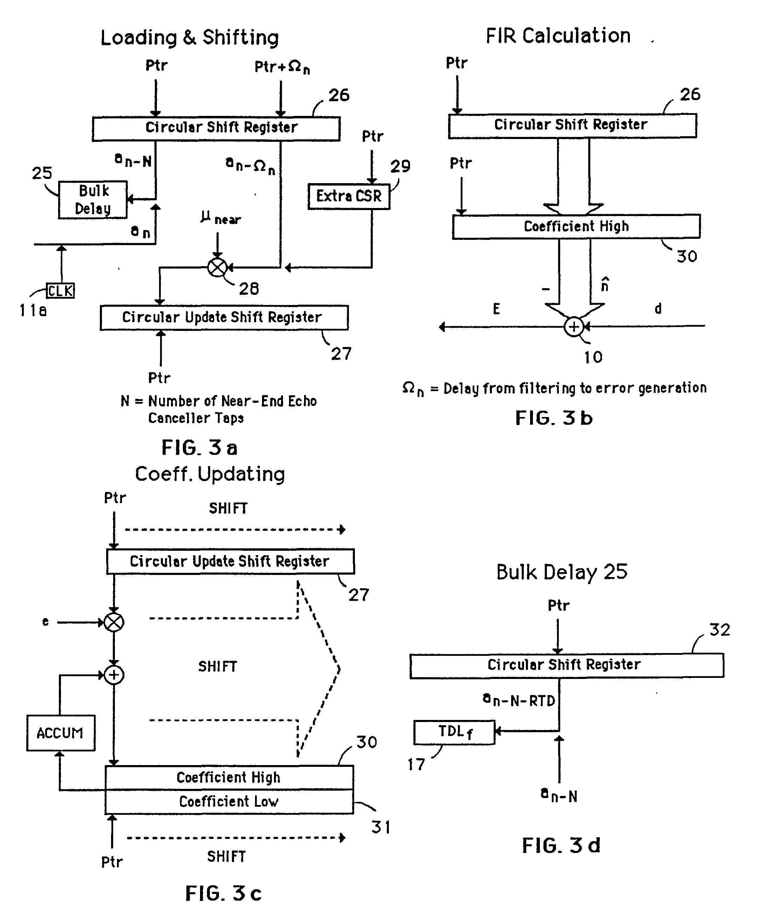

The structure and operation of the above-described echo canceller according to the present invention are based on recognition which will be explained on the block diagrams of FIG 3, FIG 5, FIG 6 and FIG 7. Certain elements of FIG 1 have been included in these block diagrams, which elements have then been given the same reference numerals, whereas for simplicity's sake other non-essential elements have been omitted.

According to the present invention, it is obvious that for forming a local echo copy $\hat{n}$ from the modulated signal to be transmitted it is necessary, as shown in FIG 3a, 3b and 3c, to use the following elements: four circular shift registers, namely two circular shift registers 26 and 27, corresponding to the tapped delay line 4 and two circular shift registers 30 and 31, corresponding to the upper and lower bits of the double precision set of filter coefficients 5, respectively. First, the circular shift registers have to be initialized by means of setting the pointers at the beginning of the corresponding registers and synchronized with the bulk delay 25. The other tapped delay line 17 and set of coefficients 18 are organized in the same way. The upper and lower circular shift registers 30 and 31 of the set of coefficients 5 will be called coefficient high and coefficient low, respectively, hereinafter.

The near-end echo canceller performs in an iterative adaptive manner such a local echo copy $\hat{n}$ to obtain at the output of the difference circuit 10 a signal which is either zero or the remote echo signal when transmitter 1 only transmits, in other words, in half-duplex transmission operation. The circular shift register 26 will accept data $a_n$ from the pretransmitter 23 at discrete intervals 1/T', where T' is the sampling period. Before having to accept new samples, this circular shift register 26 will cede to the bulk delay 25 its last sample in time, in other words, the $a_{n-K}$ sample, where K is the number of near-end echo canceller tap coefficients. If the number of canceller taps K is higher than the number of delay samples $\Omega T'$ in the adjustment loop, the circular update shift register 27 may be loaded with the $\Omega T'$ delayed sample from the circular shift register 26 modified by the near-end stepsize value $\mu_{near}$ by means of the multiplier 28. On the other hand, if $K < \Omega T'$, an extra circular update shift register 29 of $\Omega T'$ locations may be added to load the circular update shift register 27. Hence, this register is used for the adjustment algorithm of the near-end echo canceller.

FIG 3b shows the embodiment of the filtering calculation together with the error generation which are represented by the equation

$$E = d - \sum_{n=0}^{K-1} a_{n-i} \; c^H_i(n).$$

( See equations 2 and 3 )
where $d = r(n)$ is the received signal consisting of local echo, remote echo, far-end incoming signal and system noise. It is clear that the same equation applies to complex signal. At each sample interval 1/T', the pointer of the coefficient high 30 is always set to position zero ( i.e. $c^H_0(n)$ ) where H stands for the upper coefficients, while the pointer of the circular shift register 26 is taken from the previous set of operations ( i.e. Loading and Shifting in FIG 3a ).

The updating of the adjustment algorithm is shown in FIG 3c in which the circular update shift register 27 and coefficient high 30 and coefficient low 31 are used to generate the new values of the set of coefficients 5.

The FIG 3b and 3c clearly show that the filtering performed by the echo canceller corresponds to a single precision operation while the updating of the tap coefficients themselves is done in double precision according to

$c^{H,L}_i(n + 1) = c^{H,L}_i(n) + \mu_{near} \, a_{n-i-\Omega T'} \, e$, i = 0,1,2, ..... ,K-1 (See equation 4 )

Note that $a_{n-i-\Omega T'}$ and e are still taken one previous sample in time ( i.e. $a_{n-i-\Omega T'-1}$ and $e_{-1}$ ) and that complex signals can be applied and obtained. Finally, in FIG 3d, the embodiment of the bulk delay 25 is shown. The circular shift register 32 will accept data from the circular shift register 26 of the near-end echo canceller, but before that, the circular shift register will cede to the tapped delay line 17 its last sample in time which is round trip delay ( RTD ) samples delayed, in other words, the $a_{n-K-RTD}$ sample, where the round trip delay is the number of bulk delay 25 samples measured at the beginning of the training sequence.

The same technique and performance is obtained by the far-end echo canceller. Although, there is no figure displaying this structure, the operation is exactly the same as the near-end echo canceller with the only difference that in the former cancellation, the difference circuit 16 result is obtained from complex signals, while for the difference circuit 10, it is obtained from real signals.

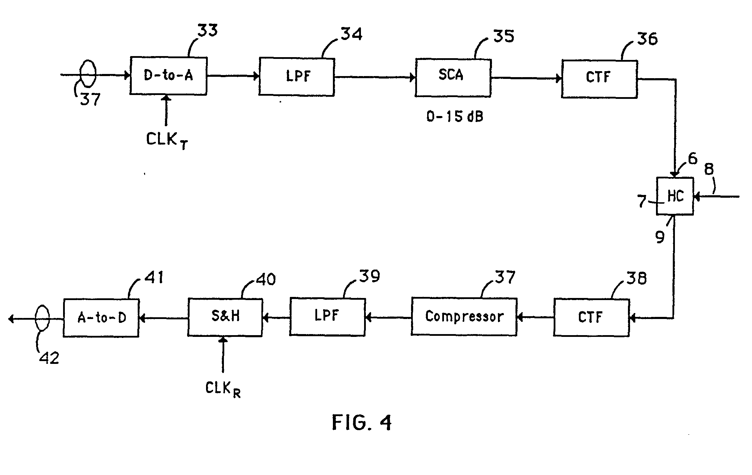

Before describing the circuit diagram of FIG 4, which corresponds to transmiter 1, receiver 2 and hybrid coupler 7, the reason of considering this figure will be explained. As it is known, nowadays, echo cancellers are world-wide used in order to improve the performance of public telephone networks and also private local networks. Unfortunately, the characteristics of each network is so different that it would be a very hard task to design an echo canceller capable of imitate all the possible impulse responses in such networks unless it is helped by some other signal conditioners included in the echo path, like transmitter 1, receiver 2 and hybrid coupler 7. Although, this is not the only reason for the design and inclusion of these elements, the appropriate design of these conditioners certainly enhances the performance of the echo canceller and facilitates its operation.

FIG 4 shows a possible embodiment of transmitter 1, receiver 2 and hybrid coupler 7. Transmitter 1 is composed by a digital-to-analog converter 33, a low-pass filter 34, a scaler 35 and a continuous time filter 36. The output of a digital signal processor ( not shown in the figure ) is branched to the input of digital-to-analog converter 33 by means of the conductor 37. Some of the specifications of the embodiment represented in FIG 4 may, as an example, be the following: the output of the low-pass filter 34 is affected by a scaler 35 which changes the level from 0 ( +0.0, -0.3 ) to -15 ( +0.2, -0.2 ) dBm in steps of 1 dBm and is connected to the continuous time filter 36. The hybrid coupler 7 provides an output impedance of 600 $\Omega$ with a tolerance of ± 30% from 0.3 to 3.4 KHz. At receiver 2, a level compressor 37 with an 8 bit MDAC working in divider mode produces a useful range of 24 dB. The continuous time filter 38 is branched to the anti-aliasing low-pass filter 39 for 12 bit analog-to-digital conversion. A conversion frequency $CLK_R$ is supplied to the 12 bit sample-and-hold 40 and also to the analog-to-digital converter 41 with a read-write processor interface connected to the digital signal processor by means of conductor 42. The structure of the echo canceller requires an ADC of such an accuracy that the quantization noise introduced onto the received wanted signal is insignificant. It is important in the structure to maintain good linearity in the transmitter, the hybrid coupler and the ADC in the receiver when they are in the echo channel. The reason for this is that nonlinear distortion cannot be modelled using a linear adaptive filter. If the echo cancellation requirement is for 60 dB below the transmit signal level, any extraneous noise in the analogue circuitry must be eliminated.

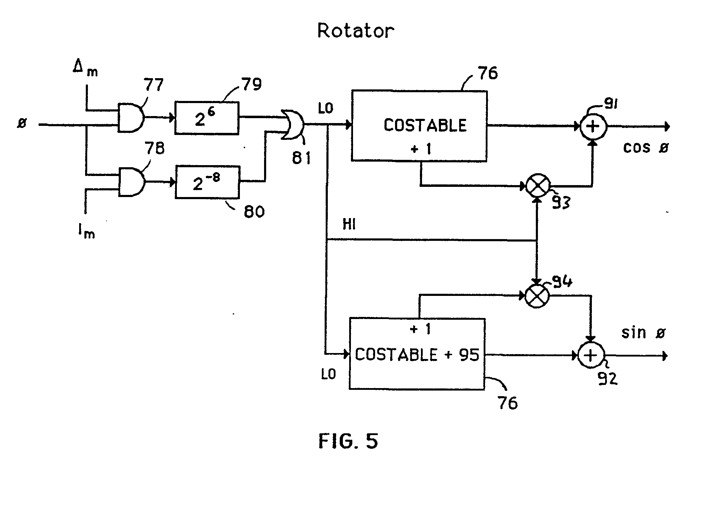

FIG 5 shows an embodiment of the rotator 20 which basically performs a complex multiplication with the frequency offset correction. It multiplies two sets of complex signals, the first set is the signal $\underline{f}$ to be modified or affected, and the second set corresponds to the rotation value. This operation requires a cosine table 76 to obtain a sine and cosine generation with an accuracy better than 10 bits from 0° to 180° and from -180° to 0°. Due to the fact that the accuracy of the sine wave in the table is limited, the mechanism to obtain a closer value is to interpolate between two values in the table consisting of 128 different values. A part of the measured angle value $\phi$, which corresponds to the angle calculated by the DPLL and shown in FIG 6, is used to select which one of the 64 points in the cosinusoidal curve which is the closest value to the measured angle by means of masking the value with a constant $\Delta_m$ using an AND gate 77. The other part of the value of the angle is used to obtain one of the other 64 points which correspond to the difference value between two contiguous points. This is done by means of masking an index reference $I_m$ using another AND gate 78 and then shifting the two values with the shifters 79 and 80 to produce the correct pointer for the cosine table 76 by using the XOR gate 81. With the adders 91 and 92 and the multipliers 93 and 94 the output of this process gives the sinusoidal and cosinusoidal values of the measured angle, which are used to multiply the vector coming from the phase splitter 19. The same technique is used by the derotator 21. The only difference is that the signal set to be modified is first made a conjugate signal. The derotator 21 is used to rotate back the global error signal $\underline{e}$ to be used by the adjustment algorithm in the far-end echo canceller. This is achieved by multiplying the output of the frequency offset correction means with an opposite or complementary rotation value. The algorithm for the near-end echo canceller coefficient updating does not take this rotation but takes the real part of the unaffected global error signal $e$. However, for complex calculation of the tap coefficients, the global error signal $\underline{e}$ must be used by the adjustment algorithm.

FIG 6 shows an embodiment of difference circuit 62 with frequency offset correction circuit 16 shown in FIG 1, FIG 2 and FIG 9. The circuit corresponds to a second-order digital phase-locked loop ( DPLL ) used to track the variation in phase and frequency of two input signals. The signals $\underline{E}$ and $\hat{\underline{f}}$ are here considered in which $\underline{E}$ may contain: the residual local echo ( $n-\hat{n}$ ), the remote echo affected by phase-roll, the system noise and the far-end incoming signal $E_n$, while $\hat{\underline{f}}$ only contains the remote echo copy and the corrector noise. When the probability density function of the noise is fixed, the signal-to-noise ratio ( SNR ) is also fixed in steady-state, independent of the signal-to-echo ratio ( SER ).

In order to obtain the general expression governing the phase detector 43 of the corrector, the following analysis applies: the difference in angles of two vectors, both starting at the origin can be obtained by dividing the real and imaginary components on one vector by the other vector

$$\frac{\underline{E}}{\hat{\underline{\jmath}}} = \frac{|\underline{E}|}{|\hat{\underline{\jmath}}|} \quad \arg \phi_E - \phi_{\hat{\jmath}} = \mathrm{Re}\left[\frac{|\underline{E}|}{|\hat{\underline{\jmath}}|}\right] + j\,\mathrm{Im}\left[\frac{|\underline{E}|}{|\hat{\underline{\jmath}}|}\right].$$

The difference in angle may be obtained by

$$\arg \phi_E - \phi_{\hat{\jmath}} = \sin^{-1}\frac{\mathrm{Im}\left[\underline{E}\,\hat{\underline{\jmath}}^*\right]}{|\underline{E}|\,|\hat{\underline{\jmath}}|}$$

for small angle differences ( e.g. $< 5°$ ), then

$$\arg \phi_E - \phi_{\hat{\jmath}} \approx \frac{\mathrm{Im}\left[\underline{E}\,\hat{\underline{\jmath}}^*\right]}{|\underline{E}|\,|\hat{\underline{\jmath}}|} = \phi_{error}$$

$$\sin \phi_{error} = \frac{\mathrm{Im}\left[\underline{E}\,\hat{\underline{\jmath}}^*\right]}{|\underline{E}|\,|\hat{\underline{\jmath}}|}$$

In half-duplex operation $|\underline{E}| \approx |\hat{\underline{\jmath}}|$ obtaining

$$\sin \phi_{error} = \frac{\mathrm{Im}\left[\underline{E}\,\hat{\underline{\jmath}}^*\right]}{|\hat{\underline{\jmath}}|^2} = \frac{\mathrm{Im}\left[\underline{E}\,\hat{\underline{\jmath}}^*\right]}{|\underline{E}|^2}$$

This is obtained by the modulus value circuit 44, the square root means 45 and the divider 46. In this case the echo-to-noise ratio ( ENR ) is bigger than in the case of full-duplex operation and the calculation of the error angle $\phi_{error}$ becomes simple. However, in full-duplex operation, the remote echo is contaminated by the far-end incoming signal which can be seen as uncorrelated noise with much higher power, therefore $|\underline{E}| \gg |\hat{\underline{\jmath}}|$ then

$$\sin \phi_{error} = \frac{\mathrm{Im}\left[\underline{E}\,\hat{\underline{\jmath}}^*\right]}{|\underline{E}|\,|\hat{\underline{\jmath}}|} \tag{6}$$

In order to avoid the deterioration of the accurate value calculation of the frequency offset angle $\phi$, in the loop filter when $|\underline{E}| \gg |\hat{\underline{\jmath}}|$, the denominator of equation (6) can be obtained by taking the expected values of the far-end echo signal and remote echo copy $\hat{\jmath}$ signal, during half-duplex operation, and combining them to obtain the stability-forcing value, SF, as follows: taking expected values of the previous expression

$$< |\sin \phi_{error}| > < |\underline{E}| > < |\hat{\underline{\jmath}}| > = <\mathrm{Im}[\underline{E}\,\hat{\underline{\jmath}}^*] >$$

13

$$\frac{2}{\pi} <| \underline{E} |> <| \overset{\wedge}{\underline{f}} |> = <\text{Im} [\underline{E} \overset{\wedge}{\underline{f}} {}^* |>$$

where $<| \underline{E} |> <| \overset{\wedge}{\underline{f}} |>$ corresponds to an approximation of the average power of the two signal $\underline{E}$ and $\overset{\wedge}{\underline{f}}$. To obtain this approximation, absolute value circuit 47, the multiplier 48 and the low-pass filter 49 are used; and the divider 50, to obtain the difference in angle of the vector signals. This difference is due to the fact that at the beginning of full-duplex operation, the loop filter 54 of the frequency offset corrector 16 has not been properly initialized because the energies of the far-end incoming signal E and the far-end echo copy may vary in such a way that it could be impossible to initialize unless some extra help is provided. This help comes from the stability-forcing circuit 51 which is represented in FIG 7. This feature is available from the beginning of half-duplex operation period and consists of obtaining the root mean squared ( RMS ) value of a zero-mean coloured signal by means of calculating the absolute value of the same signal affected by a constant in multiplier 55 for the absolute value of $\overset{\wedge}{\underline{f}}$ ( by going through the circuit 52 ) and in multiplier 58 for the absolute value of E ( by going through circuit 57 ). By measuring the energies of these two signals and combining them, through the multiplier 60, the initial state of the loop filter 54 in full-duplex operation is obtained. Another possibility for initializing the loop filter with an accurate value in the transition state from half-duplex to full-duplex operation by means of a stability-forcing feature in accordance to the equation

$$SF = [\sigma_E \sigma \overset{\wedge}{\underline{f}}]^{-1}$$

can be obtained to form

$$[<| \underline{E} |> <| \overset{\wedge}{\underline{f}} |>]^{-1} = SF$$

$< >$ denotes the expectation of the quantity inside the brackets, $\sigma_E$ being the mean or expected value of the complex far-end echo signal and $\sigma \underline{E}$ being the mean or expected value of the complex far-end echo copy signal.

Switch 100 is coupled to the output of the divider 46 when the system works in half-duplex operation, to the output of divider 50 when working in full-duplex operation mode and to the output of the FDX stability forcing circuit 51 at the transition time from half-duplex to full-duplex. The loop filter 54 corresponds to a first order low-pass filter where the cut-off frequency is governed by a variable bandwidth algorithm. this algorithm produces a steady and continuous reduction of noise ( i.e. far-end incoming signal ) to be used by the voltage-controlled oscillator 53 ( VCO ) within the DPLL.

The second order DPLL is governed by the following expressions which apply to half-duplex as well as to full-duplex operation modes

$$\phi_{error} = \frac{\text{Im} \left[ \underline{E} \, \overset{\wedge}{\underline{f}} {}^* \right]}{| \underline{E} | \, | \overset{\wedge}{\underline{f}} |}$$

$\Phi(n) = \Phi(n-1) + \beta \, \phi_{error}$

$\Phi(n)$ is the output of the loop filter integrator which is contained in the loop filter 54 and

$\phi(n) = \phi(n-1) + \Phi(n-1) + (\alpha + \beta) \, \phi_{error}$

$\alpha$ and $\beta$ being fixed coefficients having values smaller that 1, $\phi_{error}$ being the difference in angles of two vectors containing the frequency offset ( see above ) and $\phi(n)$ being the output of the voltage-controlled oscillator ( VCO ) which information is used by the rotator and derotator to generate the frequency offset compensation.

When the DPLL has not a continuous input during a certain period of time, an angle estimation 90 keeps tracking the changes in phase and/or frequency of the signals $\underline{E}$ and $\overset{\wedge}{\underline{f}}$. This angle estimation is based on the knowledge of previous steady-state angle measurements made in half-duplex period. During steady-state of half-duplex operation, the angle increment or decrement in the loop filter of the DPLL is estimated as a function of the interval sampling $1/T'$, kept in memory and used for further processing. This value is used to continue the frequency offset tracking even if useful information is not available. The angle estimation 90 only functions in one mode of transmission ( i.e. when a silent period is generated in the training of the answer mode. See CCITT Recomendation V32).

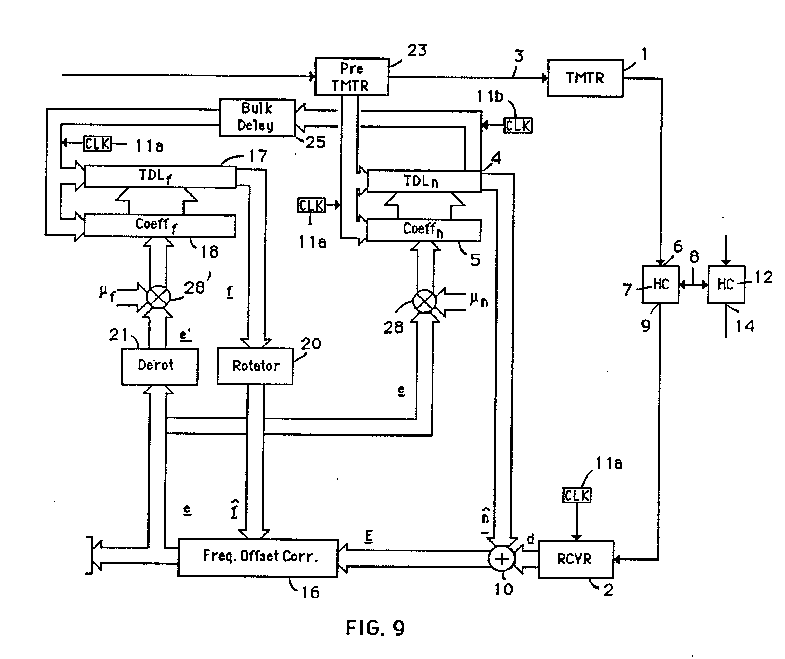

FIG 8 shows an embodiment of the pretransmitter 23 which is composed by a serial-to-parallel converter 63, an encoder 75, a look-up table mapping 64, a dual low-pass filter 66, a quadrature amplitude modulator 67 and a fixed coefficient amplitude equaliser 68. The binary data stream coming from the scrambler circuit ( not shown in the figure ) is branched to the input of the serial-to-parallel converter 63 by means of the conductor 73. This converter 63 prepares the binary data stream into blocks of data selected by speed signal 74. The encoder 75 supplies the correct set of binary data according to the selected speed signal 74 affected by differential coding, trellis convolutional encoding or nothing at all, as mentioned in CCITT Recomendations. The look-up table mapping 64 consists of a phase-point generation according to the speed signal 74. The dual low-pass filter 66 corresponds to two 16th order raised cosine filters used to reduce the intersymbol interference ( ISI ) of the transmitted signal. The output of the two low-pass filters is affected by the modulator 67 which uses a cosine table 76 to generate only the real component of the passband signal. The no-gain amplitude equaliser 68 is used to compensate only a part of the amplitude distortion introduced by a communication link ( i.e. square-root of its frequency response ) and to help the recovery of the rest of the amplitude and delay distortion which should be obtained by the adaptive equaliser at the receiver end. The input of the symbol-driven echo canceller ( far-end and/or near-end ) is branched from the conductor 65 which contains the real and imaginary part of the transmitted symbol ( as is for example necessary for the embodiment represented in FIG 2 and FIG 9 ).

FIG 9 shows another embodiment of the digital echo canceller in which the input of the rear-end echo canceller adaptive digital filter ( having an in-phase path and quadrature path ) is directly connected to the pretransmitter 23 ( after the phase-point generation described in FIG 8 ) through the bulk delay 25, for receiving data symbols. Therefore, the echo canceller system requires, together with both the in-phase and quadrature subcancellers of the near-end echo canceller, a demodulator device which is included in receiver 2, to bring the echo signal d back to baseband signal and perform the required operation in the echo canceller filtering and adjustment algorithms. The input of the far-end echo canceller adaptive digital filter ( having an in-phase path and a quadrature path ) is directly connected to the near-end echo canceller through the bulk delay 25, for receiving data symbols. This optimizes the memory space of the bulk delay 25; the unmodulated symbols ( baseband signals ) are easily represented in half the wordlength ( i.e. 8 bits ), therefore the in-phase and quadrature components of a 1/T interval fit in one word of memory space.

The operation of the echo canceller proceeds in two phases: first the near-end cancellation algorithm is brought into operation on its own. Convergence of this first process is normally completed within around the "Round Trip Delay" measured value. After this time has elapsed, operation of the far-end cancellation algorithm is commenced, including the frequency offset correction algorithm. The initialization of the echo canceller is invoked by clearing the workspace memory within the digital signal processor ( e.g. coefficients, delay lines, operating variables, etc. ) and by setting the array pointers in their correct position. The initialization sequence conforms to the requirements of the International Telegraph and Telephone Consultative Committee ( CCITT ), Red Book, Vol. VIII, Recomendation V32 and is operated for starting up from cold, and also in case of retrains.

The structure and operation of the above-described echo canceller according to the present invention are based on recognition which were explained on the block diagrams of FIG 3, FIG 5, FIG 6 and FIG 7. Certain elements of FIG 1 have been included in these block diagrams, which elements have then been given the same reference numerals, whereas for simplicity's sake other non-essential elements have been omitted.

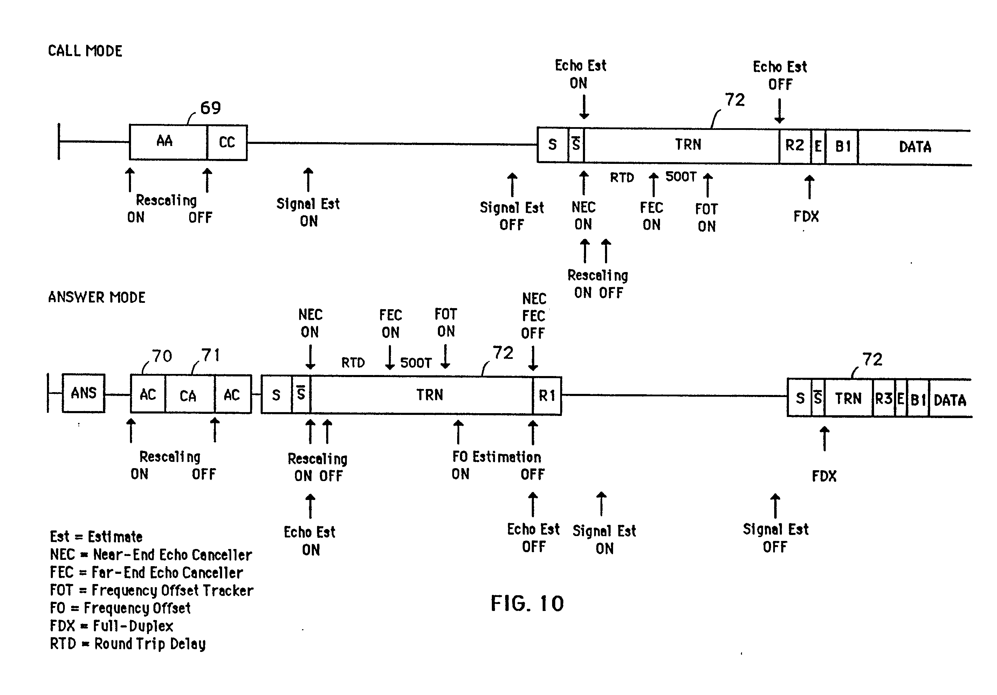

The CCITT Recomendation V32 gives the start-up and retrain procedures to clear the handshacking up of two or more modems, shown in FIG 10. The mode of operation ( i.e. call or answer ) is first identified and the program initialization set in the correct mode to start transmission. The carrier state **A** is repetitively transmitted in call mode in order to train the level compressor 37 while the carrier states **AC** and **CA** are used in answer mode. In this mode, the training of the echo canceller and the frequency offset corrector 16 comes first, to avoid the problem of wrongly calculating the scale factor in **AC** and **CA**, the level compressor 37 is retrained to obtained a better value for the scale factor. The reason for this is that the factor value obtained with only two frequency tone signal may be different when a more white signal is measured. Then, the level compressor 37 is once more used for a small period ( e.g. 100 symbols ) during scrambled ones ( i.e. TRN ) sequence. At the same time, the far-end echo power calculation for the stability-forcing feature may start; meanwhile, the far-end incoming signal power at the other end modem may be calculated to be used locally by the same algorithm. At this end modem, the frequency offset corrector has converged to its minimum possible level and waits that the TRN sequence be ended. That dissables the echo power calculation, the near-end and far-end echo cancellers adjustments and enables the angle estimation 56 until full-duplex transmission begins.

## Claims

1. An echo cancellation method for cancelling the echo from the received signal, with frequency offset tracking and correction in remote echo, for a full-duplex data transmission modem characterized in that the received data signals are subjected to

(a) a near-end echo cancellation, and

(b) a far-end echo cancellation, which far-end echo cancellation is combined with the frequency offset tracking and correction,

and in that both cancellations are separated by a bulk delay,

and in that the near-end echo cancellation and the far-end echo cancellation operate at least with the real component of data signals to be transmitted,

and in that both cancellations are based on an adaptive algorithm.

2. An echo cancellation device for a full-duplex data transmission modem, comprising

(a) a near-end echo canceller which receives a data signal to be transmitted and supplies a local echo copy signal which is adjusted in an adaptive manner for reducing a near-end error signal formed by the difference between a signal received from a near-end interface, in particular a hybrid coupler, and said local echo copy signal;

(b) a far-end echo canceller which receives a delayed version of the data signal to be transmitted and supplies a remote echo copy signal which is adjusted in an adaptive manner for reducing a far-end error signal, and which is formed by the difference between a signal received from a far-end interface, in particular a hybrid coupler, and said remote echo copy signal.

3. An echo cancellation device with frequency offset tracking and correction in remote echo for a full duplex modem data transmission, comprising

(a) a near-end echo canceller which receives a data signal to be transmitted and supplies a near-end echo copy signal which is adjusted in an adaptive manner for reducing a near-end error signal formed by the difference between a signal received from a near-end interface, in particular a hybrid coupler, and said near-end echo copy signal;

(b) a far-end echo canceller which receives a delayed version of the data signal to be transmitted and supplies a far-end echo copy signal which is adjusted in an adaptive manner for reducing a far-end error signal, and which is formed by the difference between a signal received from a far-end interface, in particular a hybrid coupler, and said far-end echo copy signal; and

(c) frequency offset correction means coupled to the far-end echo canceller for tracking and correction the frequency offset in the remote echo.

4. An echo canceller device according to claim 3 in which

(a) a pretransmitter permits the near-end echo canceller to be either sample driven or symbol driven and the far-end echo canceller to be either sample driven or symbol driven;

(b) the near-end echo canceller and the far-end echo canceller each comprise an adaptive digital filter, in particular a digital filter consisting of a tapped delay line and a set of coefficients;

(c) bulk delay means supply the delayed version of the data signal to be transmitted to the far-end echo canceller;

(d) the frequency offset correction means comprise a second-order digital phase-locked loop (DPLL) to which the remote copy signal and the near-end error signal are supplied in order to track and correct the variation in phase and frequency of those two signals.

5. An echo canceller device according to claims 3 or 4 in which the far-end echo canceller and the frequency offset correction means are coupled to each other by means of a rotator and a derotator, whereby the rotator multiplies the output of the tapped delay line of the far-end echo canceller with a rotation value and whereby the derotator multiplies the output of the frequency offset correction means with an opposite or complementary rotation value.

6. An echo canceller device according to claims 2 and 3 for a modem for data transmission; wherein the near-end echo canceller comprises means for forming a sample

$$S_{cn}(nT+T') = \sum_{i=0}^{K-1} A_{n-i} \, C_i(n)$$

from the data signal to be transmitted at each sampling instant

$t_n = nT + T'$

n being an integer between $-\infty$ to $+\infty$, T being the symbol interval, T' being the sampling interval, K being the number of tap coefficients in the near-end echo canceller adaptive digital filter, $A_n = \{ A_n e^{jw_c t} \}$ in complex form or $a_n = \text{Re} \{ A_n e^{jw_c t} \}$ in real form, being input values of the near-end echo canceller adaptive digital filter at instants $(n-i)T'$, $C_i(n) + \{ C_i(n) \}$ in complex form or $c_i(n) = Re \{ C_i(n) \}$ in real form, being the filter tap coefficients corresponding to samples of a near-end echo channel impulse response at instants $(n-i)T'$, $A_n = a_n + jb_n$, $C_i(n) = c_i(n) + jd_i(n)$, $e^{jw_c t}$ being the rotation value to produce a two-dimensional modulated signal according to the carrier frequency $w_c/2\pi$ and $S_{cn}$ in complex form or $s_{cn}$ in real form, being output values of the near-end echo canceller adaptive digital filter at instants $(n-i)T'$; and wherein the far-end echo canceller comprises means for forming a sample

$$S_{cf}(nT+T') = \sum_{i=K}^{M-2} A_{n-i-RTD} \, C_i(n)$$

from the delayed data signal to be transmitted at each sampling instant

$t_n = nT + T'$

n being an integer between $-\infty$ to $+\infty$, RTD being the round trip delay value, M being the number of tap coefficients in the far-end echo canceller adaptive digital filter, $A_{n-RTD} = \{ A_{n-RTD} \, e^{j(w_c t + w_1 t)} \}$ in complex form or $a_{n-RTD} = Re \{A_{n-RTD} \, e^{j(w_c t + w_1 t)} \}$ in real form, being input values of the far-end echo canceller adaptive digital filter at instants $(n-i)T'$, $C_i(n) = \{ C_i(n) \}$ in complex form or $c_i(n) = Re \{ C_i(n) \}$ in real form, being the filter tap coefficients corresponding to samples of a far-end echo channel impulse response at instants $(n-i)T'$, $e^{j(w_c t + w_1 t)}$ being the rotation value to produce a two-dimensional modulated signal according to the carrier frequency $w_c/2\pi$ together with the radian frequency offset $w_{w_1}$ and $S_{cf}$ in complex form or $S_{cf}$ in real form, being output values of the far-end echo canceller adaptive digital filter at instants $(n-i)T'$.

7. An echo canceller device according to claim 5, wherein the near-end echo canceller comprises means for changing the filter tap coefficients $C(n)$ or $c(n)$ at an instant $t_n$ for obtaining the filter tap coefficients $C(n+1)$ or $c(n+1)$ for complex and real form, respectively, at an instant $t_{n+1}$ in accordance with the recursion equations

$C_i(n+1) = C_i(n) + \mu_{near} A^*_{n-i-\Omega T'-1} \, e(n-1)$, ( complex )

$c_i(n+1) = c_i(n) + \mu_{near} a_{n-i-\Omega T'-1} \, \overline{e(n-1)}$, ( real ) for $i = 0,1,2 \ldots K-1$

where * denotes the complex conjugate, $\mu_{near}$ being a fixed coefficient having a value smaller that 1, i being an integer between 0 and K-1, $\Omega$ being the delay introduced in the tap adjustment loop belonging to the transmission path, $e(n)$ being the value of the global error signal at instant $t_n$ and $e(n)$ being the value of the real part of a global error signal at instant $t_n$; the far-end echo canceller comprises means for changing the filter tap coefficients $C(n)$ or $c(n)$ at an instant $t_n$ for obtaining the filter tap coefficients $C(n+1)$ or $c(n+1)$ for complex and real form, respectively, at an instant $t_{n+1}$ in accordance with the recursion equations

$C_i(n+1) = C_i(n) + \mu_{far} A^*_{n-RTD-i-\Omega T'-1} e(n-1)$, ( complex )

$c_i(n+1) = c_i(n) + \mu_{far} a_{n-RTD-i-\Omega T'-1} \, \overline{e(n-1)}$, ( real ) for $i = K, K+1 \ldots M-2$

$\mu_{far}$ being a fixed coefficient having a value smaller that 1, i being an integer between K and M-2, $\Omega$ being the delay introduced in the tap adjustment loop belonging to the cancellation path, which represents the same value of the delay introduced in the tap adjustment loop belonging to the transmission path because a similar Hilbert transformer is used in both paths, and RTD being the round trip delay value measured in the half-duplex training period.

8. An echo canceller device according to claim 3 wherein the digital phase-locked loop comprises means for tracking the effect of phase-roll in the far-end echo channel in accordance to the equations

$$\phi_{error} = \frac{Im \left[ E \, \hat{f}^* \right]}{|E| \, |\hat{f}|},$$

$\Phi(n) = \Phi(n-1) + \beta \, \phi_{error}$

$\Phi(n)$ is the output of the loop filter integrator which is contained in the loop filter of the DPLL, $E$ being the near-end error signal, $\hat{f}$ being the remote echo copy, $\hat{f}^*$ being the complex conjugate of the remote echo copy $\hat{f}$ and

$\phi(n) = \phi(n-1) + \Phi(n-1) + (\alpha + \beta) \, \phi_{error}$

$\alpha$ and $\beta$ being fixed coefficients having values smaller that 1, $\phi_{error}$ being the difference in angles of the two vectors, $E$ and $\hat{f}$, containing the frequency offset and $\phi(n)$ being the output of a voltage-controlled

17

oscillator ( VCO ) contained in the DPLL, which information is used by the rotator and derotator to generate the frequency offset compensation.

9. An echo canceller device according to claim 8, wherein the digital phase-locked loop comprises means for initializing the loop filter with an accurate value in the transition state from half-duplex to full-duplex operation by means of stability-forcing in accordance to the equation

$$SF = [\,\sigma_{\underline{E}}\quad \sigma_{\hat{\underline{E}}}\,]$$

$\sigma_{\underline{E}}$ being the mean or expected value of the complex remote echo signal and $\sigma\,\hat{\underline{E}}$ being the mean or expected value of the complex remote echo copy signal.

FIG. 1

**FIG. 2**

Loading & Shifting

FIG. 3 a

N = Number of Near-End Echo Canceller Taps

FIR Calculation

$\Omega_n$ = Delay from filtering to error generation

FIG. 3 b

Coeff. Updating

FIG. 3 c

Bulk Delay 25

FIG. 3 d

FIG. 4

Rotator

FIG. 5

## Frequency-Offset Correction

FIG. 6

## FDX Stability-Forcing

FIG. 7

FIG. 8

FIG. 9

CALL MODE

Echo Est
ON

Echo Est
OFF

```
              _69_                                          72
    ┌─────┬─────┐                              ┌──┬──┬──────────────┬───┬─┬───┬──────────┐
────┤  AA │ CC  ├──────────────────────────────┤ S│ S̄│      TRN     │ R2│E│ B1│   DATA   ├───
    └─────┴─────┘                              └──┴──┴──────────────┴───┴─┴───┴──────────┘
```

       ↑       ↑            ↑                  ↑    ↑      RTD  ↑ 500T ↑                ↑
    Rescaling              Signal Est      Signal Est  NEC     FEC    FOT            FDX
    ON     OFF                ON              OFF       ON      ON     ON

                                                        ↑  ↑
                                                     Rescaling
                                                     ON OFF

ANSWER MODE

NEC        FEC        FOT            NEC
ON         ON         ON            FEC
                                    OFF

```
      _70_  _71_
    ┌────┬────┬────┐   ┌──┬──┬──────────────────┬───┐              ┌──┬──┬─────┬───┬─┬───┐
────┤ AC │ CA │ AC ├───┤ S│ S̄│       TRN        │ R1├───────────────┤ S│ S̄│ TRN │ R3│E│ B1│ DATA
    └────┴────┴────┘   └──┴──┴──────────────────┴───┘              └──┴──┴─────┴───┴─┴───┘
```
 ANS

       ↑         ↑        ↑  ↑     RTD  ↓ 500T ↓      72  ↓              ↑
    Rescaling          Rescaling                   FO Estimation     FDX
    ON     OFF         ON OFF                       ON        OFF

                        ↑                            ↑       ↑          ↑
                     Echo Est                     Echo Est Signal Est Signal Est
                     ON                           OFF      ON         OFF

Est = Estimate
NEC = Near-End Echo Canceller
FEC = Far-End Echo Canceller
FOT = Frequency Offset Tracker
FO = Frequency Offset
FDX = Full-Duplex
RTD = Round Trip Delay

FIG. 10

EP 0 388 493 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 682 358  (WERNER)<br>* Column 13, lines 30-38; column 2, lines 23-56; column 6, lines 31-35; figures 2,3; column 3, line 57 - column 4, line 5 * | 1-6 | H 04 B    3/23 |
| Y | | 8 | |
| A | | 7 | |
| X | US-A-4 742 510  (QUATIERI)<br>* Column 4, line 57 - column 6, line 25; column 8, lines 1-10; figures 1,4 * | 1-6 | |
| A | | 7,8 | |
| Y | IEEE TRANSACTIONS ON COMMUNICATIONS, vol. COM-35, no. 8, August 1987, pages 865-867, IEEE, New York, US; K. HO PARK et al.: "A phase-adaptive echo canceller with reduced sensitivity to power variations"<br>* Page 866, equations 8,9 * | 8 | |
| X | EP-A-0 299 648  (CODEX)<br>* Claim 1; figure 2 * | 1-3,6 | TECHNICAL FIELDS SEARCHED (Int. Cl.5)<br><br>H 04 B |
| A | WO-A-8 901 723  (G.E.C.)<br>* Page 5, lines 26-33 * | 7 | |

The present search report has been drawn up for all claims

| Place of search | Date of completion of the search | Examiner |
|---|---|---|
| THE HAGUE | 30-10-1989 | SNELL T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P0401)